# EUROPEAN PATENT APPLICATION

(11) **EP 4 840 685 A1**
(43) Date of publication of application: **18.11.2026**
(21) Application number: 25923609.9
(22) Date of filing: 25.09.2025
(51) Int. Cl.: B60L 58/15, H01M 10/44

(54) **CHARGING OVERCURRENT PROTECTION METHOD AND SYSTEM BASED ON AIR CONDITIONING POWER EMERGENCY UNLOADING**

(30) Priority: 04.03.2025 CN 202510249824
(71) Applicant: Chery Automobile Co., Ltd., Wuhu, Anhui 241006 (CN)
(72) Inventor: WEI, Shengnian, Wuhu, Anhui 241006 (CN); XIAO, Anxin, Wuhu, Anhui 241006 (CN)
(74) Representative: Adamson Jones
(86) International application number: PCT/CN2025/124012
(87) International publication number: WO 2026/184076

(57) **Abstract**

The present disclosure relates to a charging overcurrent protection method and system based on air conditioner power emergency unloading. The method includes: acquiring a battery charging power request update signal and an air conditioner power unloading occurrence time requirement (S1); judging a chronological order between the air conditioner unloading occurrence time and the update time of battery charging power request (S2); when the air conditioner unloading occurrence time is before the update time of battery charging power request, increasing the current protection threshold and maintaining the current charging power; when the air conditioner unloading occurrence time follows the update time of battery charging power request, reducing the charging power and maintaining the present current protection threshold (S3).

## Description

This present disclosure claims priority to Chinese patent application No. 202510249824.0, filed March 4, 2025, and entitled "CHARGING OVERCURRENT PROTECTION METHOD AND SYSTEM BASED ON AIR CONDITIONER POWER EMERGENCY UNLOADING", the entire contents of which are incorporated herein by reference.

### TECHNICAL FIELD

The present disclosure belongs to the technical field of charging protection for electric vehicles, extended-range vehicles, or plug-in hybrid electric vehicles, and specifically relates to a charging overcurrent protection method and system based on air conditioner power emergency unloading.

### BACKGROUND

With the rapid development of new energy vehicles, the market share of electric vehicles continues to increase. However, the issue of slow charging has become a significant factor affecting the development of electric vehicles. Therefore, it has become increasingly urgent to find ways to quickly shorten the charging time of electric vehicles.

To address the issue of slow charging, main engine factories have increased the high-voltage values of vehicles and boosted charging power. Simultaneously, battery manufacturers have also invested more in research and development for fast battery charging. However, currently, due to the reasons of the whole vehicle (for example, the charging request current decreases sharply), the charging current output by the charging pile cannot follow in time, resulting in the overcurrent protection of the whole vehicle charging and the termination of charging, which brings a very bad feeling to the customers.

### SUMMARY

The purpose of the present disclosure is to provide a charging overcurrent protection method and system based on air conditioner power emergency unloading, in order to solve the technical problem in related technologies where vehicle charging overcurrent protection relies heavily on the hardware conditions of the vehicle.

To achieve the above objectives, the present disclosure adopts the following technical solutions.

Firstly, the present disclosure provides a charging overcurrent protection method based on air conditioner power emergency unloading, including:
acquiring a battery charging power request update signal and an air conditioner power unloading occurrence time requirement; and
judging a chronological order between an air conditioner unloading occurrence time and a battery charging power request update time based on the air conditioner unloading occurrence time requirement and the battery charging power request update signal; and
wherein a battery management system increases a current protection threshold and maintains a current charging power when the air conditioner unloading occurrence time is before the battery charging power request update time; and the battery management system decreases a charging request power and maintains a present current protection threshold when the air conditioner unloading occurrence time is after the battery charging power request update time.

Optionally, the battery management system increases the current protection threshold and maintains the current charging power, including:
the battery management system maintains the current charging power until a next charging request power signal update after the air conditioner completes power unloading, at which point the charging power is updated again; and;
the battery management system increases the present current protection threshold, and an increased current protection threshold is calculated according to the following formula: ${I}_{FB 2 ′} = k \left({I}_{B 2 ′}+{I}_{T 2}\right) ;$
wherein, I_{FB2'} represents the increased current protection threshold, k represents an overcurrent protection threshold coefficient of the battery management system, and I_{B2***'***} represents a current value of the battery management system when the air conditioner power unloading event requirement is received; I_{T2} represents a current value of the air conditioner when the air conditioner power unloading event requirement is received.

Optionally, the battery management system reduces the charging request power and maintains the present current protection threshold, including:
the battery management system maintains the present current protection threshold until a next charging request power signal update after the air conditioner completes power unloading, at which point the current protection threshold is updated again; and;
the battery management system reduces a current charging request power, and a reduced current charging request power is calculated according to the following formula: ${P}_{BN 2} = {P}_{B 2 ′} - {P}_{T 2} ;$
wherein, P_{BN2} represents the reduced current charging request power; P_{B2'} represents a current charging power value of the battery management system when the air conditioner power unloading event requirement is received; P_{T2} represents an operating power value of the air conditioner when the air conditioner power unloading event requirement is received.

Optionally, the method further includes:
when the air conditioner power unloading occurrence time requirement is acquired, an operating power and a power demand of the air conditioner system are maintained at a current state until the power unloading is completed.

Optionally, before acquiring the battery charging power request update signal and the air conditioner power unloading occurrence time requirement, the method further includes:
acquiring real-time required power based on a vehicle operating state and an available charging power; and providing a supply power equal to the real-time required power; and
charging according to the supply power, and feeding back an actual air conditioner power consumption value, an actual air conditioner current consumption value, an actual battery charging power value, and an actual battery current protection threshold.

In the second aspect, the present disclosure provides a charging overcurrent protection system based on air conditioner power emergency unloading, including:
an acquisition unit, configured to acquiring a battery charging power request update signal and an air conditioner power unloading occurrence time requirement;
a judging unit, configured to judge a chronological order between an air conditioner unloading occurrence time and a battery charging power request update time based on the air conditioner unloading occurrence time requirement and the battery charging power request update signal;
an execution unit, configured to: increase a current protection threshold and maintains a current charging power, when the air conditioner unloading occurrence time is before the battery charging power request update time; and decrease a charging request power and maintains a present current protection threshold, when the air conditioner unloading occurrence time is after the battery charging power request update time.

Optionally, the execution unit is configured to:
maintain the current charging power through the battery management system until a next charging request power signal is updated after the air conditioner completes power unloading, at which point the charging power is updated again; and
increase the present current protection threshold through the battery management system, and an increased current protection threshold is calculated according to the following formula: ${I}_{FB 2 ′} = k \left({I}_{B 2 ′}+{I}_{T 2}\right) ;$
wherein, I_{FB2'} represents the increased current protection threshold, k represents an overcurrent protection threshold coefficient of the battery management system, and I_{B2***'***} represents a current value of the battery management system when the air conditioner power unloading event requirement is received; I_{T2} represents a current value of the air conditioner when the air conditioner power unloading event requirement is received.

Optionally, the execution unit is configured to:
maintain the present current protection threshold by the battery management system until a next charging request power signal update after the air conditioner completes power unloading, at which point the current protection threshold is updated again; and
reduce a current charging request power through the battery management system, and a reduced current charging request power is calculated according to the following formula: ${P}_{BN 2} = {P}_{B 2 ′} - {P}_{T 2} ;$
wherein, P_{BN2} represents the reduced current charging request power; P_{B2'} represents a current charging power value of the battery management system when the air conditioner power unloading event requirement is received; P_{T2} represents an operating power value of the air conditioner when the air conditioner power unloading event requirement is received.

In a third aspect, the present disclosure provides an electronic device including a memory, a processor, and a computer program stored in the memory and executable on the processor, wherein the processor, when executing the computer program, implements the charging overcurrent protection method based on air conditioner power emergency unloading as described in any of the above aspects.

In the fourth aspect, the present disclosure provides a computer-readable storage medium, wherein the computer-readable storage medium stores a computer program, and the computer program, when executed by a processor, implements the charging overcurrent protection method based on air conditioner power emergency unloading as described in any of the above aspects.

In the fifth aspect, the present disclosure provides a computer program product, wherein the computer program product includes computer instructions stored in a computer-readable storage medium, and a processor of an electronic device reads the computer instructions from the computer-readable storage medium, and executes the computer instructions to cause the electronic device to execute the charging overcurrent protection method based on air conditioner power emergency unloading as described in any of the above aspects.

Compared with related technologies, the present disclosure has the following beneficial effects:
The present disclosure absorbs the surge current generated by the unloading of air conditioner power by dynamically adjusting the current protection threshold or charging power of the Battery Management System (BMS), thus avoiding overcurrent protection without requiring additional hardware, significantly enhancing charging stability and user experience. It addresses the issue of battery overcurrent protection caused by air conditioner power emergency unloading during high-voltage direct current fast charging. By dynamically adjusting the protection threshold or charging power of the BMS through software strategies, it ensures a continuous and stable charging process. Without requiring hardware modifications, it adjusts protection parameters in real-time through software strategies, reducing implementation costs. It effectively absorbs the surge current generated by the unloading of air conditioner power, avoiding charging interruptions. It enhances the user's charging experience and the reliability of the entire vehicle system.

### BRIEF DESCRIPTION OF DRAWINGS

To more clearly illustrate the technical solutions of the embodiments of the present disclosure, the accompanying drawings required for the embodiments will be briefly introduced below. It should be understood that the following drawings only show some embodiments of the present disclosure and should not be regarded as limiting the scope. For those skilled in the art, other relevant drawings can be acquired based on these drawings without creative effort.
FIG. 1 is a schematic diagram of a method flow of the present disclosure;
FIG. 2 is a current/power curve diagram of air conditioner power unloading in embodiments of the present disclosure before the update of a BMS (Battery Management System) charging request;
FIG. 3 is a current/power curve diagram of air conditioner power unloading in embodiments of the present disclosure after the update of the BMS charging request;
FIG. 4 is a logic flow diagram of the air conditioner power unloading occurring in embodiments of the present disclosure before the update of the BMS charging request; and
FIG. 5 is a logic flow diagram of air conditioner power unloading occurring in embodiments of the present disclosure after the update of the BMS charging request.

### DETAILED DESCRIPTION

To make the objectives, technical solutions, and advantages of the embodiments of the present disclosure clearer, the technical solutions in the embodiments of the present disclosure will be described clearly and comprehensively below in conjunction with the accompanying drawings. Obviously, the described embodiments are a part of the embodiments of the present disclosure, rather than all embodiments. Generally, the components of the embodiments of the present disclosure described and illustrated in the accompanying drawings can be arranged and designed in various different configurations.

Therefore, the following detailed description of the embodiments of the present disclosure provided in the accompanying drawings is not intended to limit the scope of the claimed present disclosure, but merely represents selected embodiments of the present disclosure. All other embodiments acquired by those skilled in the art based on the embodiments of the present disclosure without creative effort fall within the scope of protection of the present disclosure.

It should be noted that similar labels and letters indicate similar items in the following figures. Therefore, once an item is defined in one figure, it does not need to be further defined and explained in subsequent figures.

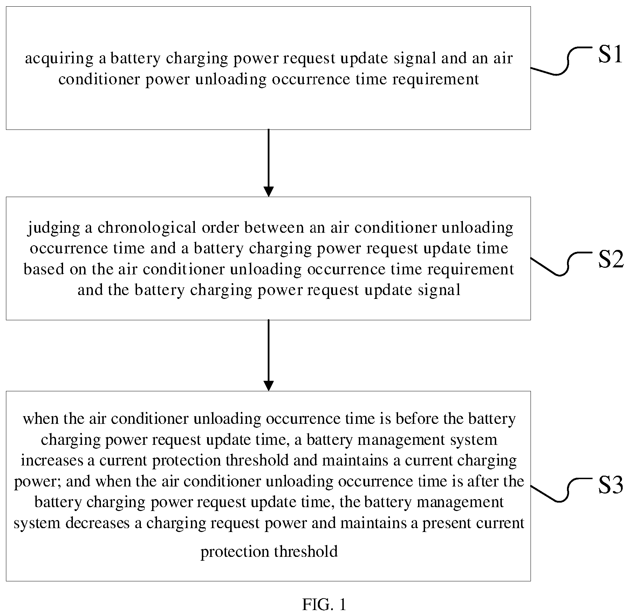

The present disclosure will be further described in detail with reference to the accompanying drawings:
Referring to FIG. 1, the present disclosure relates to electric vehicles, extended-range vehicles, or plug-in hybrid electric vehicles. During high-voltage direct current fast charging, when there is an urgent need to unload the power of air conditioner high-voltage loads, the protection threshold of the battery charging current is updated in advance through software strategies, thereby absorbing the surge current generated during the unloading of air conditioner power and avoiding battery charging overcurrent protection issues. Specifically, a charging overcurrent protection method based on air conditioner power emergency unloading is provided, which can be applied to vehicles, such as on-board controllers in vehicles, and includes the following steps S1, S2 and S3.

S1: acquiring a battery charging power request update signal and an air conditioner power unloading occurrence time requirement.

The battery charging power request update signal is used to request an update of the charging power for the vehicle battery, such as the charging power for the vehicle's traction battery. The air conditioner power unloading occurrence time requirement is used to indicate the required occurrence time for air conditioner power unloading. The air conditioner power unloading can refer to the process where the vehicle's air conditioner stops operating, thereby halting power consumption.

S2: judging a chronological order between an air conditioner unloading occurrence time and a battery charging power request update time based on the air conditioner unloading occurrence time requirement and the battery charging power request update signal.

The air conditioner unloading occurrence time is the time when the vehicle's air conditioner is unloaded, and the battery charging power request update time is the time when the vehicle's battery charging power is requested to be updated. The air conditioner unloading occurrence time is determined according to the air conditioner unloading occurrence time requirement, and the battery charging power request update time is determined according to the battery charging power request update signal. By determining the air conditioner unloading occurrence time and the battery charging power request update time, a chronological order between the air conditioner unloading occurrence time and the battery charging power request update time can be judged.

S3: when the air conditioner unloading occurrence time is before the battery charging power request update time, a battery management system (BMS) increases a current protection threshold and maintains a current charging power; and when the air conditioner unloading occurrence time is after the battery charging power request update time, the battery management system decreases a charging request power and maintains a present current protection threshold.

The current protection threshold is the threshold configured to vehicle current protection. The current charging power refers to the current charging power of the vehicle battery, such as the charging power of the vehicle when acquiring a battery charging power request update signal and the air conditioner power unloading occurrence time requirement, or when determining the chronological order between the air conditioner unloading occurrence time and the battery charging power request update time. The charging request power is the charging power requested by the vehicle, such as the charging power requested from the charging pile. The present current protection threshold can be the current protection threshold when acquiring a battery charging power request update signal and the air conditioner power unloading occurrence time requirement, or the current protection threshold when determining the chronological order between the air conditioner unloading occurrence time and the battery charging power request update time.

The present disclosure absorbs surge currents generated by air conditioner power unloading by dynamically adjusting the current protection threshold or charging power of the battery management system (BMS), thus avoiding overcurrent protection without requiring additional hardware, significantly enhancing charging stability and user experience. It addresses the issue of battery overcurrent protection caused by air conditioner power emergency unloading during high-voltage direct current fast charging. By dynamically adjusting the protection threshold or charging power of the BMS through software strategies, it ensures a continuous and stable charging process. Without requiring hardware modifications, it adjusts protection parameters in real time through software strategies, reducing implementation costs. It effectively absorbs surge currents generated by air conditioner power unloading, avoiding charging interruptions, and enhancing the user's charging experience and the reliability of the entire vehicle system.

In some embodiments, when the air conditioner unloading occurrence time is before the battery charging power request update time, the battery management system increases the current protection threshold and maintains the current charging power, which includes:
the battery management system maintains the current charging power until the next charging request power signal update after the air conditioner completes power unloading, at which point the charging power signal is updated again;
the battery management system increases the present current protection threshold, and the increased present current protection threshold is calculated according to the following formula: ${I}_{FB 2 ′} = k \left({I}_{B 2 ′}+{I}_{T 2}\right)$

Wherein, I_{FB2'} represents the increased current protection threshold, k represents the overcurrent protection threshold coefficient of the battery management system, and I_{B2'} represents the current value of the battery management system when the air conditioner power unloading event requirement is received; I_{T2} represents the current value of the air conditioner when the air conditioner power unloading event requirement is received. The charging request power signal is a signal indicating the charging power requested by the vehicle, and the time of receiving the air conditioner power unloading event requirement can be the same as the time of acquiring the air conditioner power unloading occurrence time requirement or before the time of acquiring the air conditioner power unloading occurrence time requirement.

In some embodiments, when the air conditioner unloading occurrence time is after the battery charging power request update time, the battery management system reduces the charging request power and maintains the present current protection threshold, which includes:
the battery management system maintains the present current protection threshold until the next charging request power signal update after the air conditioner completes power unloading, at which point the current protection threshold is updated again;
the battery management system reduces the current charging request power, which is specifically calculated according to the following formula: ${P}_{BN 2} = {P}_{B 2 ′} - {P}_{T 2}$

In the formula, P_{BN2} represents the current charging request power; P_{B2'} represents the current charging power value of the battery management system when the air conditioner power unloading event requirement is received; P_{T2} represents the operating power value of the air conditioner when the air conditioner power unloading event requirement is received. The charging request power signal is a signal indicating the charging power requested by the vehicle. The time of receiving the air conditioner power unloading event requirement can be the same as the time of acquiring the air conditioner power unloading occurrence time requirement or before the time of acquiring the air conditioner power unloading occurrence time requirement.

In some embodiments, when the air conditioner power unloading occurrence time requirement is acquired, the operating power and power demand of the air conditioner system are maintained at the current state until the power unloading is completed. The current state refers to the state of the operating power and power demand of the air conditioner system at the time when the air conditioner power unloading occurrence time requirement is acquired.

In some embodiments, when the air conditioner software has a power unloading requirement, it sends a power unloading event request and an unloading occurrence time request to the bus. After receiving the air conditioner power unloading requirement event and unloading occurrence time signal sent by the air conditioner software, the battery management software determines whether the air conditioner power unloading time occurs before or after the battery charging power request update event.

When the air conditioner power unloading time occurs before the BMS charging power request update signal:
After the air conditioner software sends out a power unloading demand signal and an unloading occurrence time signal, it maintains its own operating power and power demand at the current state until the power unloading is completed.

Upon receiving the power unloading demand signal and unloading time signal sent by the air conditioner software, the battery software will: 1) maintain the current charging power until the next charging request power signal update after the air conditioner completes power unloading, at which point the charging power signal is updated again; 2) increase the current protection threshold by summing the current value of the battery itself and the current value of the air conditioner when receiving the power unloading signal sent by the air conditioner software, and then multiplying the result by the current protection threshold coefficient to acquire a new battery overcurrent protection threshold. Until the air conditioner completes power unloading, the current protection threshold is updated to return to the value it was when the battery received the power unloading signal from the air conditioner.

When the air conditioner power unloading time occurs after the BMS charging power request update signal:
After the air conditioner software sends out a power unloading demand signal and an unloading occurrence time signal, it maintains its own operating power and power demand at the current state until the power unloading is completed.

Upon receiving the power unloading demand signal and unloading time signal sent by the air conditioner software, the battery software will: 1) maintain the present current protection threshold until the next charging request power signal update after the air conditioner completes power unloading, at which point the current protection threshold is updated again; 2) reduce the current charging power, that is, subtract the operating power value of the air conditioner from its own current charging power value when receiving the power unloading signal sent by the air conditioner software until the next charging request power signal update after the air conditioner completes power unloading, at which point the charging power signal is updated again.

In some embodiments, before acquiring the battery charging power request update signal and the air conditioner power unloading occurrence time requirement, the method further includes:
acquiring real-time required power based on a vehicle operating status and an available charging power, and providing a supply power equal to the real-time required power; and
charging according to the supply power, and feeding back an actual air conditioner power consumption value, an actual air conditioner current consumption value, an actual battery charging power value, and an actual battery current protection threshold.

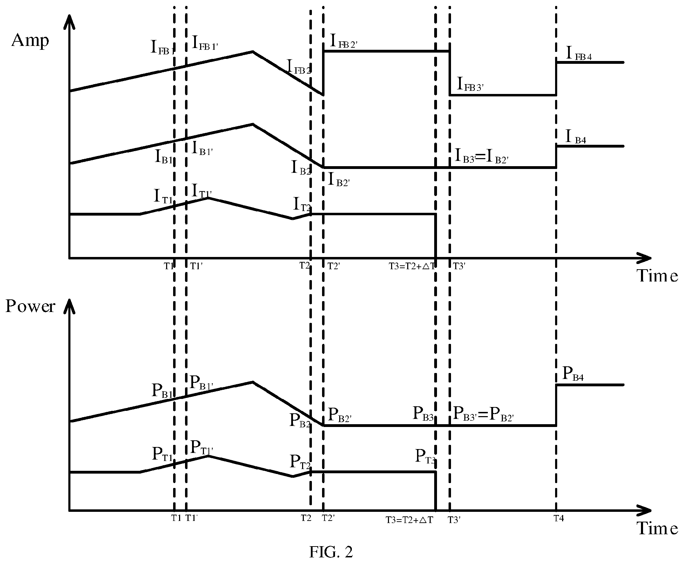

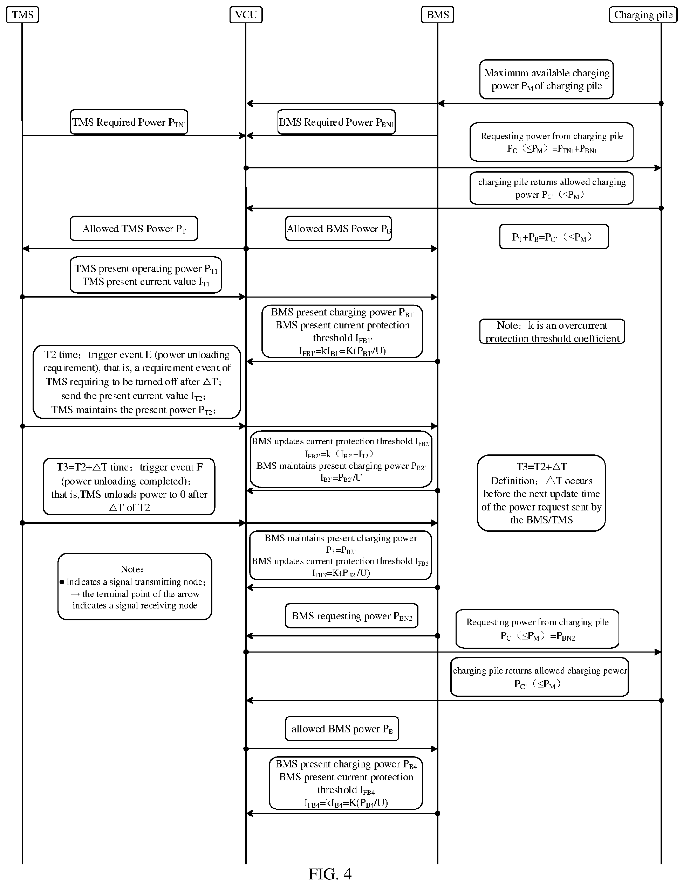

[Example 1] The occurrence time △T of air conditioner power emergency unloading occurs before the power request event of the BMS/Thermal Management System (TMS), as shown in Figures 2 and 4. Specifically, it includes:
The vehicle is connected to the charging pile, which sends the current maximum available charging power P_{M} to the BMS and the Vehicle Control Unit (VCU);
Based on their current operating status and available charging power, TMS and BMS send the required operating powers P_{TN1} and P_{BN1} to VCU;
After calculating the required power of BMS and TMS (PC (≤ PM) = P_{TN1} + P_{BN1}), VCU sends it to the charging pile;
The charging pile returns the available charging power PC' to the VCU;
VCU returns the available power values of TMS and BMS;
At time T1, the TMS returns the actual consumed power value P_{T1} and the actual consumed current value I_{T1};
At time T1': BMS returns the actual charging power value P_{B1'} and the actual current protection threshold I_{FB1'} = kI_{B1'}=K(P_{B1}/U);
Time T2: when there is an air conditioner power emergency unloading demand event E, the TMS air conditioner control software sends out an air conditioner power emergency unloading event E demand signal and the upcoming time of air conditioner power emergency unloading △T; after the TMS sends out the air conditioner power emergency unloading demand event signal, it maintains the current power P_{T2} for continuous operation until the air conditioner power unloading event F occurs;
At time T2': after receiving the emergency unloading event E signal for air conditioner power and the occurrence time △T, the BMS:
   The charging power of the BMS remains at the current charging power PB2' (assuming no other abnormal protection is in place) until the next BMS-requested charging power update event occurs, at which point the charging power is updated;
   The overcurrent protection threshold of BMS is updated according to the formula I_{FB2'} = k(I_{B2'} + I_{T2}) until the air conditioner power emergency unloading is completed, at which point it is updated to I_{FB3} = K(P_{B2'}/U); k is the overcurrent protection threshold coefficient of BMS, which is a calibrated value;
   Time T3: T3=T2+△T; Event F: The TMS air conditioner software performs emergency unloading of the air conditioner power and sends a signal to the VCU and BMS; the charging power of the BMS is charged at the charging power P_{B3}=P_{B2'} at time T2'; the overcurrent protection threshold of the BMS is I_{FB3'}=I_{FB2'};
   At time T3': TMS completes the air conditioner power emergency unloading; BMS maintains the charging power as P_{B3'} = P_{B2'}; BMS updates the overcurrent protection threshold, with I_{FB3} = k(P_{B2'}/U);
   After T3' and before T4: BMS requests charging power P_{BN2} from VCU;
   VCU requests charging power PC (≤PM) = P_{BN2} from the charging pile;
   The charging pile returns the allowed charging power PC';
   At time T4: The BMS completes the next power update request and charges at the P_{B4} power level, with a current protection threshold I_{FB4}=KP_{B4}/U. The TMS has ceased operation.

This process serves as a procedure to prevent surge currents caused by TMS discharge power from triggering BMS overcurrent protection; when the same TMS discharge power demand arises again, the logic strategy will still be followed.

The purpose of this logic strategy is to raise the current protection threshold of the BMS to a reasonable protection threshold that can absorb the surge current generated by the sudden power discharge of the TMS before the TMS performs power discharge, thereby avoiding overcurrent protection issues in the BMS during TMS power discharge.

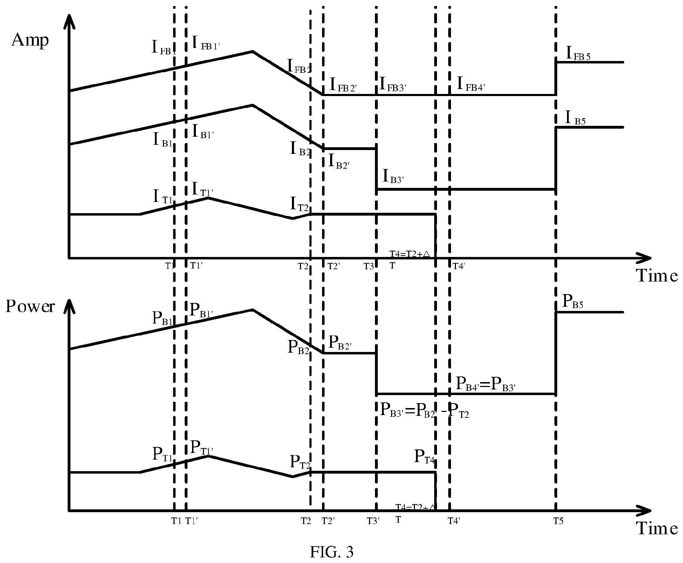

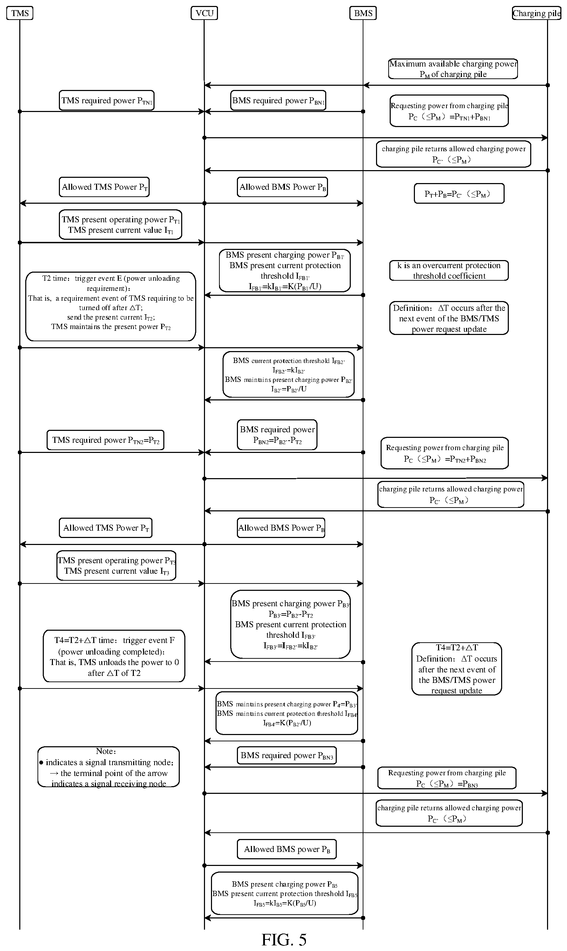

[Example 2] The occurrence time △T of air conditioner power emergency unloading occurs after the power request event of BMS/TMS, as shown in Figures 3 and 5. Specifically, it includes:
The vehicle connects to the charging pile, and the charging pile sends the current maximum available charging power P_{M} to the BMS and VCU;
Based on their current operating status and available charging power, TMS and BMS send the required operating powers P_{TN1} and P_{BN1} to VCU;
After calculating, VCU sends the required power of BMS and TMS (PC (≤ PM) = P_{TN1} + P_{BN1})to the charging pile;
The charging pile returns the available charging power PC' to the VCU;
VCU returns the available power values of TMS and BMS;
Time T1: TMS returns the actual consumed power value P_{T1} and the actual consumed current value I_{T1};
At time T1': BMS returns the actual charging power value P_{B1'} and the actual current protection threshold I_{FB1'}= kI_{B1'}=K(P_{B1'}/U);
Time T2: when there is an air conditioner power emergency unloading demand event E, the TMS air conditioner control software sends out an air conditioner power emergency unloading event E demand signal and the upcoming time of air conditioner power emergency unloading △T; after the TMS sends out the air conditioner power emergency unloading demand event signal, the TMS maintains the current power for continuous operation until the air conditioner power unloading event F occurs;
Time T2': after receiving the signal of the emergency unloading event of air conditioner power and the occurrence time △T, the BMS:
The charging power of the BMS remains at the current charging power P_{B2'} (without any other abnormal protection) until the next BMS-requested charging power update event occurs, at which point the charging power is updated;
The overcurrent protection threshold of BMS is calculated according to the formula I_{FB2'} = kI_{B2'} = k(P_{B2'}/U), and the charging power is updated when the next BMS request for charging power update event occurs after the power unloading time F of TMS; k is the coefficient of the BMS overcurrent protection threshold, which is a calibrated value;
After T2' and before T3': TMS and BMS request required power P_{TN2} and P_{BN2}=P_{B2'}-P_{T2} from VCU; VCU requests charging power PC from the charging pile; the charging pile returns the allowed charging power PC'; VCU returns the corresponding allowed power values PT and PB to TMS and BMS;
At time T3': the charging request power value of the BMS is updated to P_{B3'}=P_{B2'}-_{PT2}; the overcurrent protection threshold I_{FB3'} = I_{FB2'} = kI_{B2'} = k(P_{B2'}/U);
Time T4: T4=T2+△T; Event F: The TMS air conditioner software urgently unloads the air conditioner power to 0; The BMS charges at a power of P_{B4}=P_{B3'}=P_{B2'}-P_{T2} until the next BMS request for charging power update event occurs, at which point the charging power update is updated; The BMS's overcurrent protection threshold is I_{FB4}=I_{FB2'};
At time T4': the TMS completes the air conditioner power emergency unloading; the charging power of the BMS is charged according to P_{B4'}=P_{B3***'***} =P_{B2***'***}-P_{T2}, and is not updated until the next BMS request for charging power update event occurs; the overcurrent protection threshold of the BMS is I_{FB4'} = I_{FB2'}; at this point, the TMS has stopped running.

After T4 and before T5: BMS applies to VCU for charging power P_{BN3}; VCU applies to the charging pile for charging power PC; the charging pile returns the allowed charging power PC'; VCU returns the allowed charging power value P_{B5} to BMS;
At time T5: the BMS completes the update of the new requested power P_{B5}; the current protection threshold is updated according to the new charging power value, I_{FB5}=P_{B5}/U; at this point, the TMS has stopped running.

This process serves as a procedure to prevent surge currents caused by TMS discharge power from triggering BMS overcurrent protection; when the same TMS discharge power demand arises again, the logic strategy will still be followed.

The purpose of this logic strategy is to deduct the power value urgently discharged by the TMS from the charging power value of the BMS before the TMS performs power discharge. However, the current protection threshold of the BMS remains unchanged to absorb the surge current generated by the sudden discharge of power from the TMS, thereby avoiding overcurrent protection issues in the BMS caused by the TMS discharge power value. Using this solution can address the overcurrent protection issue during battery charging caused by air conditioner power emergency unloading, enhancing the user experience.

The present disclosure also provides a charging overcurrent protection system based on air conditioner power emergency unloading, including:
an acquisition unit, configured to acquire the battery charging power request update signal and the air conditioner power unloading occurrence time requirement;
a judging unit, configured to judge a chronological order between an air conditioner unloading occurrence time and a battery charging power request update time based on the battery charging power request update signal and the air conditioner unloading occurrence time requirement; and
an execution unit, configured to increase the current protection threshold and maintain the current charging power through the battery management system when the air conditioner unloading occurrence time is before the battery charging power request update time; and configured to decrease the charging request power and maintain the present current protection threshold through the battery management system when the air conditioner unloading occurrence time is after the battery charging power request update time.

In some embodiments, the execution unit is configured to:
maintain the current charging power through the battery management system until the next charging request power signal update after the air conditioner completes power unloading, at which point the charging power signal is updated again;
increase the present current protection threshold through the battery management system, and the increased current protection threshold is calculated according to the following formula: ${I}_{FB 2 ′} = k \left({I}_{B 2 ′}+{I}_{T 2}\right)$
Wherein, I_{FB2'} represents the increased current protection threshold, k represents the overcurrent protection threshold coefficient of the battery management system, and I_{B2'} represents the current value of the battery management system when the air conditioner power unloading event requirement is received; I_{T2} represents the current value of the air conditioner when the air conditioner power unloading event requirement is received.

In some embodiments, the execution unit is configured to:
maintain the current protection threshold by the battery management system until the next charging request power signal update after the air conditioner completes power unloading, at which point the current protection threshold is updated again;
reduce the current charging request power through the battery management system, and the reduced current charging request power is calculated according to the following formula: ${P}_{BN 2} = {P}_{B 2 ′} - {P}_{T 2} ;$

Wherein, P_{BN2} represents the reduced current charging request power; P_{B2'} represents the current charging power value of the battery management system when the air conditioner power unloading event requirement is received; P_{T2} represents the operating power value of the air conditioner when the air conditioner power unloading event requirement is received.

The present disclosure further provides an electronic device, including a memory, a processor, and a computer program stored in the memory and executable on the processor. When the processor executes the computer program, it implements the charging overcurrent protection method based on air conditioner power emergency unloading as described in the above embodiments.

The present disclosure further provides a computer-readable storage medium, wherein the computer-readable storage medium stores a computer program. When the computer program is executed by a processor, it implements the charging overcurrent protection method based on air conditioner power emergency unloading as described in the aforementioned embodiments.

The present disclosure further provides a computer program product, which includes computer instructions stored in a computer-readable storage medium. The processor of an electronic device reads the computer instructions from the computer-readable storage medium and executes them, enabling the electronic device to implement the charging overcurrent protection method based on air conditioner power emergency unloading as described in the aforementioned embodiments.

Those skilled in the art should understand that embodiments of the present disclosure can be provided as a method, system, or computer program product. Therefore, the present disclosure can take the form of an entirely hardware embodiment, an entirely software embodiment, or an embodiment combining both software and hardware aspects. Furthermore, the present disclosure can take the form of a computer program product implemented on one or more computer-usable storage media (including but not limited to magnetic disk storage, CD-ROM, optical storage, etc.) containing computer-usable program code.

The present disclosure is described with reference to flowcharts and/or block diagrams of methods, apparatuses (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer program instructions. These computer program instructions can be provided to a processor of a general-purpose computer, a special-purpose computer, an embedded processor, or other programmable data processing device to produce a machine, such that the instructions executed by the processor of the computer or other programmable data processing device produce an apparatus for implementing the functions specified in one or more processes of the flowcharts and/or one or more blocks of the block diagrams.

These computer program instructions can also be stored in a computer-readable memory that can guide a computer or other programmable data processing device to work in a specific manner, such that the instructions stored in the computer-readable memory produce a manufactured product including an instruction device, which implements the functions specified in one or more processes of a flowchart and/or one or more blocks of a block diagram.

These computer program instructions can also be loaded onto a computer or other programmable data processing device, enabling a series of operational steps to be executed on the computer or other programmable device to produce computer-implemented processing. Thus, the instructions executed on the computer or other programmable device provide steps for implementing the functions specified in one or more processes of the flowchart and/or one or more blocks of the block diagram.

Finally, it should be noted that the above embodiments are only used to illustrate the technical solution of the present disclosure and are not intended to limit it. Despite the detailed description of the present disclosure with reference to the above embodiments, those skilled in the art should understand that modifications or equivalent substitutions can still be made to the specific implementation of the present disclosure. Any modifications or equivalent substitutions that do not deviate from the spirit and scope of the present disclosure shall be covered within the scope of protection of the claims of the present disclosure.

## Claims

1. A charging overcurrent protection method based on air conditioner power emergency unloading, comprising:
acquiring a battery charging power request update signal and an air conditioner power unloading occurrence time requirement; and
judging a chronological order between an air conditioner unloading occurrence time and a battery charging power request update time based on the air conditioner unloading occurrence time requirement and the battery charging power request update signal;
wherein a battery management system increases a current protection threshold and maintains a current charging power when the air conditioner unloading occurrence time is before the battery charging power request update time; and the battery management system decreases a charging request power and maintains a present current protection threshold when the air conditioner unloading occurrence time is after the battery charging power request update time.

2. The charging overcurrent protection method based on air conditioner power emergency unloading according to claim 1, wherein the battery management system increases the current protection threshold and maintains the current charging power, comprising:
the battery management system maintains the current charging power until a next charging request power signal update after the air conditioner completes power unloading, at which point the charging power is updated again; and
the battery management system increases the present current protection threshold, and an increased current protection threshold is calculated according to the following formula: ${I}_{FB 2 ′} = k \left({I}_{B 2 ′}+{I}_{T 2}\right) ;$
wherein, I_{FB2'} represents the increased current protection threshold, k represents an overcurrent protection threshold coefficient of the battery management system, and I_{B2***'***} represents a current value of the battery management system when the air conditioner power unloading event requirement is received; I_{T2} represents a current value of the air conditioner when the air conditioner power unloading event requirement is received.

3. The charging overcurrent protection method based on air conditioner power emergency unloading according to claim 1, wherein the battery management system reduces the charging request power and maintains the present current protection threshold, comprising:
the battery management system maintains the present current protection threshold until a next charging request power signal update after the air conditioner completes power unloading, at which point the current protection threshold is updated again; and
the battery management system reduces a current charging request power, and a reduced current charging request power is calculated according to the following formula: ${P}_{BN 2} = {P}_{B 2 ′} - {P}_{T 2} ;$
wherein, P_{BN2} represents the reduced current charging request power; P_{B2***'***} represents a current charging power value of the battery management system when the air conditioner power unloading event requirement is received; P_{T2} represents an operating power value of the air conditioner when the air conditioner power unloading event requirement is received.

4. The charging overcurrent protection method based on air conditioner power emergency unloading according to claim 1, further comprising:
when the air conditioner power unloading occurrence time requirement is acquired, an operating power and a power demand of the air conditioner system are maintained at a current state until the power unloading is completed.

5. The charging overcurrent protection method based on air conditioner power emergency unloading according to claim 1, wherein before acquiring the battery charging power request update signal and the air conditioner power unloading occurrence time requirement, the method further comprises:
acquiring real-time required power based on a vehicle operating state and an available charging power; and providing a supply power equal to the real-time required power; and
charging according to the supply power, and feeding back an actual air conditioner power consumption value, an actual air conditioner current consumption value, an actual battery charging power value, and an actual battery current protection threshold.

6. A charging overcurrent protection system based on air conditioner power emergency unloading, comprising:
an acquisition unit, configured to acquire a battery charging power request update signal and an air conditioner power unloading occurrence time requirement;
a judging unit, configured to judge a chronological order between an air conditioner unloading occurrence time and a battery charging power request update time based on the air conditioner unloading occurrence time requirement and the battery charging power request update signal;
an execution unit, configured to: increase a current protection threshold and maintains a current charging power, when the air conditioner unloading occurrence time is before the battery charging power request update time; and decrease a charging request power and maintains a present current protection threshold, when the air conditioner unloading occurrence time is after the battery charging power request update time.

7. The charging overcurrent protection system based on air conditioner power emergency unloading according to claim 6, wherein the execution unit is configured to:
maintain the current charging power through the battery management system until a next charging request power signal is updated after the air conditioner completes power unloading, at which point the charging power is updated again; and
increase the present current protection threshold through the battery management system, and an increased current protection threshold is calculated according to the following formula: ${I}_{FB 2 ′} = k \left({I}_{B 2 ′}+{I}_{T 2}\right) ;$
wherein, I_{FB2'} represents the increased current protection threshold, k represents an overcurrent protection threshold coefficient of the battery management system, and I_{B2***'***} represents a current value of the battery management system when the air conditioner power unloading event requirement is received; I_{T2} represents a current value of the air conditioner when the air conditioner power unloading event requirement is received.

8. The charging overcurrent protection system based on air conditioner power emergency unloading according to claim 6, wherein the execution unit is configured to:
maintain the present current protection threshold by the battery management system until a next charging request power signal update after the air conditioner completes power unloading, at which point the current protection threshold is updated again; and
reduce a current charging request power through the battery management system, and a reduced current charging request power is calculated according to the following formula: ${P}_{BN 2} = {P}_{B 2 ′} - {P}_{T 2} ;$
wherein, P_{BN2} represents the reduced current charging request power; P_{B2***'***} represents a current charging power value of the battery management system when the air conditioner power unloading event requirement is received; P_{T2} represents an operating power value of the air conditioner when the air conditioner power unloading event requirement is received.

9. An electronic device, comprising a memory, a processor, and a computer program stored in the memory and executable on the processor, wherein the processor, when executing the computer program, implements the charging overcurrent protection method based on air conditioner power emergency unloading according to any one of claims 1-5.

10. A computer-readable storage medium, wherein the computer-readable storage medium stores a computer program, and the computer program, when executed by a processor, implements the charging overcurrent protection method based on air conditioner power emergency unloading according to any one of claims 1 to 5.

11. A computer program product, wherein the computer program product comprises computer instructions stored in a computer-readable storage medium, and a processor of an electronic device reads the computer instructions from the computer-readable storage medium, and executes the computer instructions to cause the electronic device to execute the charging overcurrent protection method based on air conditioner power emergency unloading according to any one of claims 1-5.
